# EUROPEAN PATENT APPLICATION

(11) **EP 4 664 835 A1**
(43) Date of publication of application: **17.12.2025**
(21) Application number: 25168398.3
(22) Date of filing: 03.04.2025
(51) Int. Cl.: H04L 12/46

(54) **NETWORK COMMUNICATION METHOD AND SYSTEM BASED ON MULTIPLE CONTAINER CLUSTERS, AND STORAGE MEDIUM**

(30) Priority: 13.06.2024 CN 202410764656
(71) Applicant: Beijing Volcano Engine Technology Co., Ltd., Beijing 100190 (CN)
(72) Inventor: CHEN, Junming, Beijing 100190 (CN)
(74) Representative: Marks & Clerk LLP

(57) **Abstract**

A corresponding network segment resource is allocated (S201), by interaction between a virtual local area network controller and a virtual local area network client, to each node in the multiple container clusters, where a corresponding virtual local area network client is configured in each node. Node route information synchronized by the virtual local area network client in each node in the multiple container clusters is received (S202), by the virtual local area network controller, and global node route information recorded. The global node route information is obtained (S203), by the virtual local area network client in each node, from the virtual local area network controller, and global node route information locally maintained in the node to which the virtual local area network client belongs is updated. Virtual tunnel encapsulation and decapsulation are controlled (S204), by each node in the multiple container clusters based on the global node route information locally maintained by each node.

## Description

### FIELD

Embodiments of the present disclosure relate to the technical field of computers and network communication, and in particular, to a network communication method and system based on multiple container clusters, and a storage medium.

### BACKGROUND

A container cluster, such as Kubernetes (abbreviated as K8S), can be used to manage containerized workloads and services. By containerizing a service and deploying the containerized service in a container cluster such as Kubernetes, capabilities such as rapid deployment and fault self-healing of the service application can be implemented. In addition, with the orchestration and scheduling capabilities of the container cluster such as Kubernetes, rapid elastic scaling of the service can be implemented to cope with service pressure of different loads.

However, a conventional container cluster such as Kubernetes usually implements only communication between containers inside a single container cluster, and cannot implement container network interworking across container clusters, which limits the scale of container network application deployment.

### SUMMARY

Embodiments of the present disclosure provide a network communication method and system based on multiple container clusters, and a storage medium, to implement interconnection and interworking across container clusters.

In a first aspect, an embodiment of the present disclosure provides a network communication method based on multiple container clusters. The method comprises:
allocating, by a manner of interaction between a virtual local area network (VLAN) controller and a virtual local area network client, a corresponding network segment resource to each of multiple nodes in the multiple container clusters, where a corresponding virtual local area network client is configured in each node, each node can be allocated a unique network segment resource in a cluster, and network segment resources of all the nodes do not overlap with each other;
receiving, by the virtual local area network controller, node route information synchronized by the virtual local area network client in each node in the multiple container clusters, and recording global node route information, where the global node route information includes route information of all the nodes in the multiple container clusters;
obtaining, by the virtual local area network client in each node, the global node route information from the virtual local area network controller, and updating the global node route information locally maintained in the node to which the virtual local area network client belongs; and
controlling, by each node in the multiple container clusters based on the global node route information locally maintained by each node, virtual tunnel encapsulation and decapsulation.

In a second aspect, an embodiment of the present disclosure provides a network communication system based on multiple container clusters. The system comprises a virtual local area network controller and multiple container clusters, and a virtual local area network client is deployed on each node of the multiple container clusters.

The virtual local area network controller is configured to allocate, by a manner of interaction between the virtual local area network controller and the virtual local area network client, a corresponding network segment resource to each of multiple nodes in the multiple container clusters, where a corresponding virtual local area network client is configured in each node, each node can be allocated a unique network segment resource in a cluster, and network segment resources of all the nodes do not overlap with each other; and receive node route information synchronized by the virtual local area network client in each node in the multiple container clusters, and record global node route information, where the global node route information includes route information of all the nodes in the multiple container clusters.

The virtual local area network client in each node is configured to obtain the global node route information from the virtual local area network controller, and update the global node route information locally maintained in the node to which the virtual local area network client belongs.

Each node in the multiple container clusters is configured to control, based on the global node route information locally maintained by the node, virtual tunnel encapsulation and decapsulation.

In a third aspect, an embodiment of the present disclosure provides an electronic device. The electronic device includes at least one processor and a memory.

The memory stores computer-executable instructions.

The at least one processor executes the computer-executable instructions stored in the memory, to enable the at least one processor to perform the network communication method based on multiple container clusters according to the first aspect and various possible designs of the first aspect.

In a fourth aspect, an embodiment of the present disclosure provides a computer-readable storage medium. The computer-readable storage medium stores computer-executable instructions, and when a processor executes the computer-executable instructions, the network communication method based on multiple container clusters according to the first aspect and various possible designs of the first aspect is implemented.

In a fifth aspect, an embodiment of the present disclosure provides a computer program product. The computer program product includes computer-executable instructions, and when a processor executes the computer-executable instructions, the network communication method based on multiple container clusters according to the first aspect and various possible designs of the first aspect is implemented.

According to the network communication method and system based on multiple container clusters, and the storage medium provided in the embodiments of the present disclosure, a corresponding network segment resource is allocated, by a manner of interaction between a virtual local area network controller and a virtual local area network client, to each of multiple nodes in the multiple container clusters, where a corresponding virtual local area network client is configured in each node, each node can be allocated a unique network segment resource in a cluster, and network segment resources of all the nodes do not overlap with each other; node route information synchronized by the virtual local area network client in each node in the multiple container clusters is received by the virtual local area network controller, and global node route information is recorded, where the global node route information includes route information of all the nodes in the multiple container clusters; the global node route information is obtained, by the virtual local area network client in each node, from the virtual local area network controller, and the global node route information locally maintained in the node to which the virtual local area network client belongs is updated; and virtual tunnel encapsulation and decapsulation are controlled, by each node in the multiple container clusters based on the global node route information locally maintained by each node. According to the embodiments of the present disclosure, the network segment resource is allocated, by the virtual local area network controller, to each node in the multiple container clusters, and the global node route information is maintained. The global node route information is locally maintained, by the virtual local area network controller, in the node. In this way, the nodes in the multiple container clusters can implement interconnection and interworking based on the global node route information locally maintained by the nodes, to meet a requirement for access across the container clusters.

### BRIEF DESCRIPTION OF THE DRAWINGS

In order to describe the technical solutions in the embodiments of the present disclosure more clearly, the following briefly introduces the drawings required for describing the embodiments or the prior art. Apparently, the drawings in the following description show some embodiments of the present disclosure, and a person of ordinary skill in the art may still derive other drawings from these drawings without creative efforts.
FIG. 1 is a schematic diagram of an architecture example of a network communication method based on multiple container clusters according to an embodiment of the present disclosure;
FIG. 2 is a schematic flowchart of a network communication method based on multiple container clusters according to an embodiment of the present disclosure;
FIG. 3 is a schematic diagram of architectures of a virtual local area network controller and a virtual local area network client according to an embodiment of the present disclosure;
FIG. 4 is a schematic diagram of hook function deployment according to an embodiment of the present disclosure;
FIG. 5 is a schematic flowchart of a network communication method based on multiple container clusters according to another embodiment of the present disclosure;
FIG. 6 is a schematic flowchart of a network communication method based on multiple container clusters according to another embodiment of the present disclosure;
FIG. 7 is a schematic diagram of network address translation according to an embodiment of the present disclosure; and
FIG. 8 is a schematic diagram of a hardware structure of an electronic device according to an embodiment of the present disclosure.

### DETAILED DESCRIPTION OF EMBODIMENTS

To make objectives, technical solutions, and advantages of the embodiments of the present disclosure clearer, the following clearly and comprehensively describes the technical solutions in the embodiments of the present disclosure with reference to the drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

A conventional container cluster such as Kubernetes includes a control node and a worker node, and the control node is configured to manage metadata of the entire cluster, container scheduling, orchestration, and the like. For example, a node agent kubelet and a service agent kube-proxy are deployed on each node in Kubernetes. The node agent kubelet is configured to communicate with a control component, and invoke a standard CRI (container runtime interface) interface to interact with an underlying container running engine (such as docker and container), and is responsible for an entire series of lifecycles of a container application, including adding, deleting, and modifying a pod. The service agent kube-proxy is configured to proxy a cluster service, and a client can communicate with a container by a service domain name, so that an underlying container resource architecture (such as the number of containers and a container deployment location) can be shielded.

According to the foregoing architecture, interaction between pods in the same node in the same container cluster may be directly performed by a bridge through Layer 2 forwarding. Interaction between pods in different nodes in the same container cluster may be performed by a virtual local area network (Overlay) through virtual tunnel forwarding. An original message is encapsulated and decapsulated at an Overlay layer of the virtual local area network, to implement Pod network interworking between the different nodes. However, a conventional container cluster such as Kubernetes usually implements only communication between containers inside a single container cluster, and cannot implement container network interworking across container clusters, which limits the scale of container network application deployment.

In order to solve the foregoing technical problem, in the network communication method based on multiple container clusters provided in this embodiment of the present disclosure, the multiple container clusters form a large-scale container network. Each container cluster includes one or more nodes, and at least one pod and/or a host application (APP) are deployed on each node. The pods and/or the host application can implement interworking between different nodes in different container clusters based on a virtual local area network (Overlay) that is constructed between the different nodes in the different container clusters and that is based on an underlying physical network (Underlay). A virtual local area network controller (vxlan-controller) is deployed in the container network, and a corresponding virtual local area network client (vxlan-agent) is configured on each of the nodes in the multiple container clusters. A corresponding network segment resource is allocated, by a manner of interaction between the virtual local area network controller and the virtual local area network client, to each node in the multiple container clusters, where each node can be allocated a unique network segment resource in a cluster, and network segment resources of all the nodes do not overlap with each other; node route information synchronized by the virtual local area network client in each node in the multiple container clusters is received by the virtual local area network controller, and global node route information is recorded, where the global node route information includes route information of all the nodes in the multiple container clusters; the global node route information is obtained, by the virtual local area network client in each node, from the virtual local area network controller, and the global node route information locally maintained in the node to which the virtual local area network client belongs is updated; and virtual tunnel encapsulation and decapsulation are controlled, by each node in the multiple container clusters based on the global node route information locally maintained by the node. According to this embodiment of the present disclosure, the network segment resource is allocated, by the virtual local area network controller, to each node in the multiple container clusters, and the global node route information is maintained. The global node route information is locally maintained, by the virtual local area network controller, in the node. In this way, the nodes in the multiple container clusters can implement interconnection and interworking based on the global node route information locally maintained by the nodes, to meet a requirement for access across the container clusters.

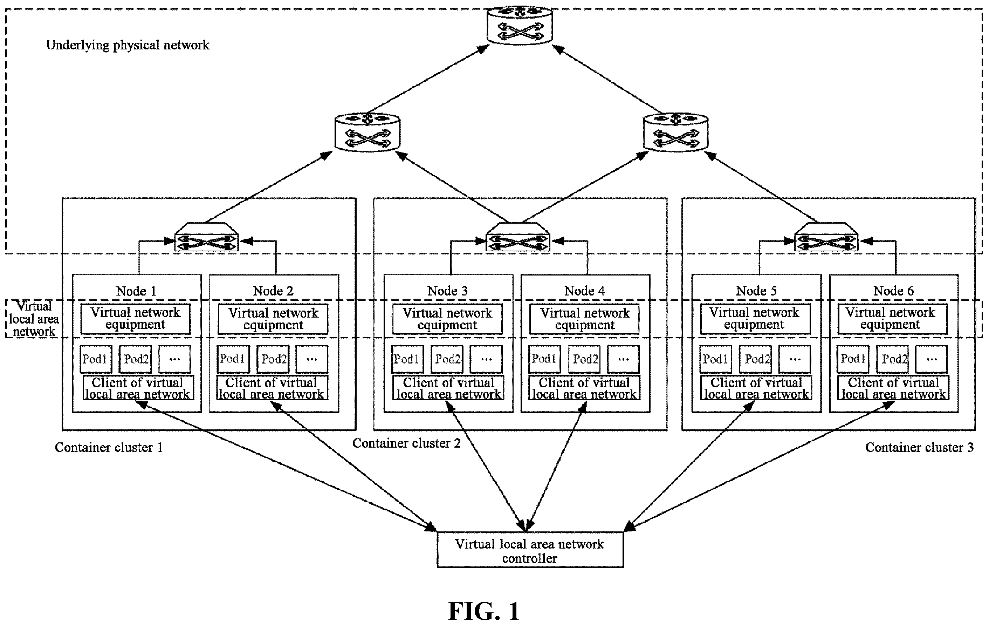

The network communication method based on multiple container clusters provided in the embodiments of the present disclosure may be applied to a large-scale container network architecture as shown in FIG. 1. The architecture may include multiple container clusters (such as Kubernetes clusters). Each container cluster includes one or more nodes, and at least one pod and/or a host application (APP) are deployed on each node. The pods and/or the host application can implement interworking between different nodes in different container clusters based on a virtual local area network (Overlay) that is constructed between the different nodes in the different container clusters and that is based on an underlying physical network (Underlay). A virtual local area network controller (vxlan-controller) is deployed in the container network, and a corresponding virtual local area network client (vxlan-agent) is configured on each of the nodes in the multiple container clusters. The virtual local area network controller is connected to the virtual local area network client. A corresponding network segment resource is allocated, by a manner of interaction between the virtual local area network controller and the virtual local area network client, to each node in the multiple container clusters; node route information synchronized by the virtual local area network client in each node in the multiple container clusters is received by the virtual local area network controller, and global node route information is recorded; the global node route information is obtained, by the virtual local area network client in each node, from the virtual local area network controller, and the global node route information locally maintained in the node to which the virtual local area network client belongs is updated; and virtual tunnel encapsulation and decapsulation are controlled, by each node in the multiple container clusters based on the global node route information locally maintained by the node.

It should be noted that user information (including but not limited to user device information and user personal information) and data (including but not limited to data used for analysis, data stored, and data displayed) involved in this application are information and data authorized by a user or fully authorized by each party. In addition, collection, use, and processing of the related data need to comply with related laws, regulations, and standards in a related country or region, and a corresponding operation entry is provided for the user to choose to authorize or refuse.

The following describes the network communication method based on multiple container clusters according to the present disclosure in detail with reference to specific embodiments.

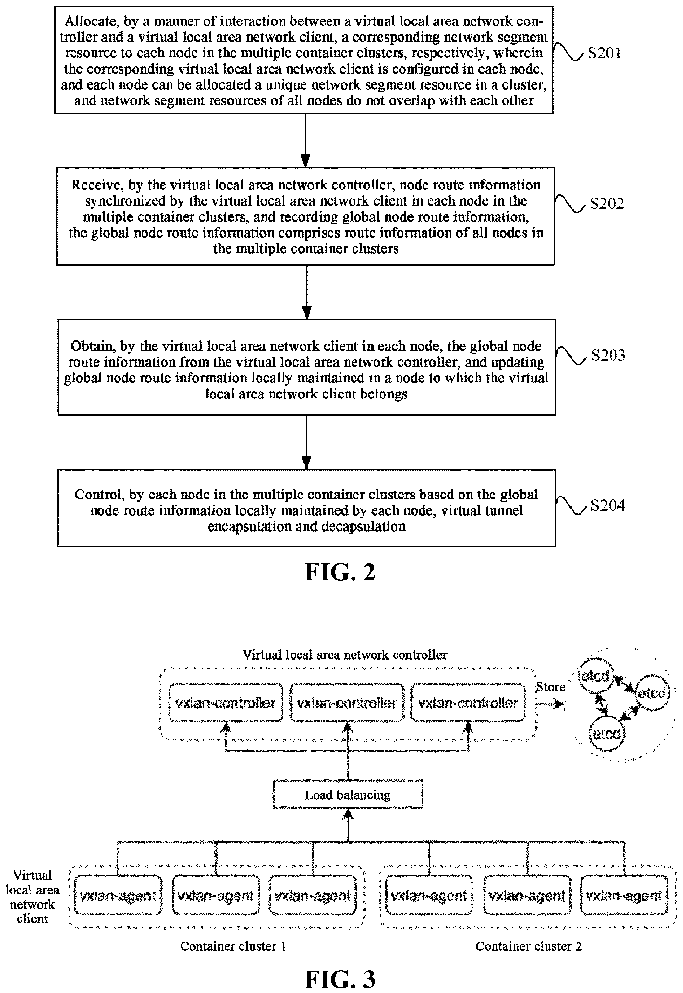

Reference is made to FIG. 2, which is a schematic flowchart of a network communication method based on multiple container clusters according to an embodiment of the present disclosure. In this embodiment, a large-scale container network may include multiple container clusters (such as Kubernetes clusters), and a system architecture thereof is shown in FIG. 1. The method in this embodiment may be applied to the system architecture shown in FIG. 1. The network communication method based on multiple container clusters includes the following steps.

In S201, a corresponding network segment resource is allocated, by a manner of interaction between a virtual local area network controller and a virtual local area network client, to each of multiple nodes in the multiple container clusters, where a corresponding virtual local area network client is configured in each node, each node can be allocated a unique network segment resource in a cluster, and network segment resources of all the nodes do not overlap with each other.

In this embodiment, the virtual local area network controller (vxlan-controller) is connected to the virtual local area network client (vxlan-agent) configured in each node in the multiple container clusters, and may interact with the virtual local area network client configured in each node, and is configured to allocate a corresponding network segment resource to a different node in a different container cluster. The network segment resource is a network segment resource in a virtual local area network, each node can be allocated a unique network segment resource in a cluster, and network segment resources of all the nodes do not overlap with each other. In addition, the virtual local area network controller may further store network segment resources of different nodes in different container clusters, for example, in an etcd (distributed key-value storage system) cluster or another database.

The virtual local area network controller allocates a network segment resource to any node in any container cluster. This may be performed when the node applies for becoming a node in a container cluster to which the node belongs. For example, for a first node in a first container cluster, when the first node applies for becoming a node in the first container cluster (that is, the first node applies for joining the first container cluster), the first node may send a node application request. Specifically, a virtual local area network client may be deployed on the first node, and the node application request is sent, by the virtual local area network client, to the virtual local area network controller. Then, the virtual local area network controller allocates the network segment resource to the first node. Allocating the network segment resource may be allocating a network segment in the virtual local area network, for example, a CIDR (Classless Inter-Domain Routing) network segment, to ensure that network segment resources of different nodes do not overlap with each other.

Optionally, when a corresponding network segment resource is allocated, by a manner of interaction between the virtual local area network controller and the virtual local area network client, to each of the nodes, one or more corresponding network segment resources may be allocated, by the virtual local area network controller, to the nodes based on a capability of each node in the multiple container clusters and/or a target number of pods to be deployed. Specifically, the node application request may include the capability of the node and/or the target number of pods to be deployed, and then the virtual local area network controller may allocate the network segment resource to the node based on the capability of the node and/or the target number of pods to be deployed. In particular, if the capability of the node is strong and/or the target number of pods to be deployed is large, the number of allocated network segment resources may be increased, so that the network segment resources are sufficient for the deployed pods, the density of the deployed pods on the node is increased, and the utilization of the network segment resources is improved. If the capability of the node is weak and/or the target number of pods to be deployed is small, the number of allocated network segment resources may be reduced, to avoid waste of the network segment resources in the virtual local area network.

In S202, node route information synchronized by the virtual local area network client in each node in the multiple container clusters is received by the virtual local area network controller, and global node route information is recorded, where the global node route information includes route information of all the nodes in the multiple container clusters.

In this embodiment, after obtaining the corresponding network segment resource, the virtual local area network client in each node in the multiple container clusters may determine the node route information. The node route information includes route information of the entire node in the virtual local area network, and may further include route information of the pod deployed in the node.

Specifically, when the pod is deployed in each node in the multiple container clusters, an address is allocated, by the virtual local area network client in each node based on the network segment resource corresponding to the node, to the pod, and the route information of the pod is determined.

Further, the virtual local area network client may synchronize the route information (including the route information of the pod) of the node to which the virtual local area network client belongs to the virtual local area network controller, so that the virtual local area network controller can obtain the global node route information and store the global node route information, for example, in an etcd (distributed key-value storage system) cluster or another database.

Optionally, in any node, the virtual local area network client may be deployed on the node in a form of a daemonsets (daemon) container. In addition to applying, for the node, for the network segment resource from the virtual local area network controller, the virtual local area network client may further configure a network device for the pod in the node and allocate virtual local area network routing information (that is, IP allocation) based on the network segment resource, to serve as a CNI (Container Network Interface). In addition, the virtual local area network client may further obtain (and synchronize) the global node route information from the virtual local area network controller, for example, remain connected to the virtual local area network controller through a long link network. Based on the long link network between the virtual local area network controller and the virtual local area network client in each node in the multiple container clusters, the virtual local area network controller may receive the node route information synchronized by the virtual local area network client in each node in the multiple container clusters. In addition, the virtual local area network client may check an update of the node route information synchronized by the virtual local area network client in each node (the update may be checked in real time or periodically). In addition, the virtual local area network client may further serve as a kube-proxy and is responsible for load balancing between pods. Configuring the network device for the pod in the node is to create and configure a virtual network interface card (veth) pair required by the pod. Allocating the virtual local area network routing information for the pod in the node is described below by an example in which the node is a first node. A specific process may be: receiving a request for deploying the pod in the first node, and allocating, by the virtual local area network client deployed in the first node as the CNI, the virtual local area network routing information (specific IP address allocation may be performed based on a CIDR network segment) to the pod to be deployed, and locally storing the virtual local area network routing information and sending the virtual local area network routing information to the virtual local area network controller (in addition, the virtual local area network routing information of the pod in the node may be reported periodically).

In S203, the global node route information is obtained, by the virtual local area network client in each node, from the virtual local area network controller, and the global node route information locally maintained in the node to which the virtual local area network client belongs is updated.

In this embodiment, the virtual local area network client in each node may obtain the global node route information from the virtual local area network controller and locally store the global node route information. In addition, the virtual local area network client may further check, in real time or periodically, an update of the global node route information of the virtual local area network controller. If an update occurs, the virtual local area network client may further re-obtain the global node route information from the virtual local area network controller and update the global node route information locally maintained in the node.

Optionally, if the virtual local area network controller is connected to the virtual local area network client in each node in the multiple container clusters through the long link network, the global node route information may be obtained, by the virtual local area network client in each node based on the long link network, from the virtual local area network controller.

Optionally, as shown in FIG. 3, multiple virtual local area network controllers may be deployed, and the virtual local area network controller may store multiple replicas of the global node route information, for example, in different etcd clusters. The multiple virtual local area network controllers provide the global node route information for the nodes in a load balancing manner, so that a load balancing capability is improved. Further, any node in any container cluster can obtain the global node route information from any of the multiple virtual local area network controllers based on load balancing, and store the global node route information locally.

In S204, virtual tunnel encapsulation and decapsulation are controlled, by each node in the multiple container clusters based on the global node route information locally maintained by the node.

In this embodiment, if there is access between the nodes in the multiple nodes in the multiple container clusters, for example, access between pods in different nodes, or access between a pod and an application (host APP) in different nodes, the nodes that access each other may perform virtual tunnel (vxlan) encapsulation and decapsulation on a data packet based on the global node route information locally maintained by the nodes, to implement cross-node interaction between the multiple container clusters (the cross-node interaction includes cross-node interaction in the same container cluster and cross-node interaction between different container clusters).

The node that sends the data package may perform virtual tunnel (vxlan) encapsulation on the data package based on the global node route information locally maintained by the node, and transmit the data package, through the virtual tunnel in the virtual local area network, to the node that receives the data package. The node that receives the data package may perform virtual tunnel (vxlan) decapsulation on the data package based on the global node route information locally maintained by the node. The virtual local area network is constructed based on the underlying physical network (Underlay) between the different nodes in the different container clusters. Therefore, the data package is actually transmitted through the virtual tunnel in the virtual local area network by the underlying physical network. For example, for data package transmission from the first node to the second node, the data package may be first redirected to a network device (vxlan dev) of the second node for virtual tunnel encapsulation, that is, vxlan encapsulation, to obtain a target data package, and the target data package is forwarded, through the underlying physical network (Underlay), to the second node, that is, the target data package is forwarded, by a physical network interface card (eth0) of the first node, to a physical network interface card (eth0) of the second node. Further, the second node may perform decapsulation, and redirect the data package to a virtual network interface card (veth) to which a target access object belongs, and send the data package to the virtual network interface card, to complete network reception.

According to the network communication method based on multiple container clusters provided in this embodiment, a corresponding network segment resource is allocated, by a manner of interaction between a virtual local area network controller and a virtual local area network client, to each of multiple nodes in the multiple container clusters, where a corresponding virtual local area network client is configured in each node, each node can be allocated a unique network segment resource in a cluster, and network segment resources of all the nodes do not overlap with each other; node route information synchronized by the virtual local area network client in each node in the multiple container clusters is received by the virtual local area network controller, and global node route information is recorded, where the global node route information includes route information of all the nodes in the multiple container clusters; the global node route information is obtained, by the virtual local area network client in each node, from the virtual local area network controller, and the global node route information locally maintained in the node to which the virtual local area network client belongs is updated; and virtual tunnel encapsulation and decapsulation are controlled, by each node in the multiple container clusters based on the global node route information locally maintained by the node. According to this embodiment, the network segment resource is allocated, by the virtual local area network controller, to each node in the multiple container clusters, and the global node route information is maintained. The global node route information is locally maintained, by the virtual local area network controller, in the node. In this way, the nodes in the multiple container clusters can implement interconnection and interworking based on the global node route information locally maintained by the nodes, to meet a requirement for access across the container clusters.

Based on any of the foregoing embodiments, after obtaining the global node route information from the virtual local area network controller, the virtual local area network client in each node may locally maintain the global node route information by an extended Berkeley Packet Filter (eBPF) execution engine. In other words, the global node route information obtained from the virtual local area network controller is stored, by the virtual local area network client in each node, in the eBPF execution engine in each node. Storing by the eBPF execution engine can facilitate subsequent fast route search and fast forwarding based on the eBPF execution engine.

Based on the foregoing embodiment, in S204, the virtual tunnel encapsulation and decapsulation are controlled, by each node in the multiple container clusters based on the global node route information locally maintained by the node. This specifically includes the following step.

The virtual tunnel encapsulation and decapsulation are controlled, by the eBPF execution engine in each node in the multiple container clusters based on a hook function preset in a network device of each node, according to the global node route information locally maintained by the node.

In this embodiment, the hook function may be preset on the network device of each node in the multiple container clusters, to bypass a kernel protocol stack of the network device, replace a processing procedure of the kernel protocol stack, and reduce the processing procedure of the kernel protocol stack, so that consumption of system resources is reduced and time consumption is reduced. The hook function is an eBPF hook, and can implement efficient data packet filtering and processing. On this basis, any data packet that needs to be transmitted by the network device of each node may be blocked by the hook function in the network device of each node, and the data packet is obtained. Then, the virtual tunnel encapsulation and decapsulation are performed, by the eBPF execution engine in each node, on the data packet according to the global node route information locally maintained by the node.

Further, there is access between the nodes (including access between nodes in the same container cluster and access between nodes across container clusters) in the multiple nodes in the multiple container clusters, for example, access between pods in different nodes, or access between a pod and an application (host APP) in different nodes.

In an embodiment, for the access between the pods in the different nodes, for example, access from a first pod in a first node to a second pod in a second node in the multiple container clusters, the first pod first sends a first access request (data packet) to the second pod, that is, the first pod sends the first access request to a network device of the first node, for example, a bridge of the first node. The first access request is obtained, by a first eBPF execution engine in the first node based on the hook function preset in the network device of the first node, and route information of the second pod in the second node is searched for from the global node route information maintained by the first eBPF execution engine. Then, virtual tunnel encapsulation is performed on the first access request based on the route information of the second pod, to send the first access request, through the virtual tunnel, to the second node.

After receiving the first access request, the second node obtains the first access request, by a second eBPF execution engine in the second node based on the hook function preset in the network device (for example, the bridge) of the second node, and searches for the route information of the second pod from the global node route information maintained by the second eBPF execution engine. Then, virtual tunnel decapsulation is performed on the first access request based on the route information of the second pod, and the first access request is sent to the second pod.

In the process of sending the first access request by the first node, operations such as virtual local area network routing information search, address translation, and forwarding between network devices need to be performed. The first access request may be obtained, by the first eBPF execution engine based on the hook function preset in the network device of the first node, and the virtual local area network routing information search, the address translation, and the forwarding between the network devices are implemented, by the first eBPF execution engine based on the hook function, instead of being directly implemented by the kernel protocol stack of the network device, so that the flow of the message in the kernel protocol stack is reduced, and resource consumption is reduced. Specifically, the target access object is determined by the hook function, and the route information of the target access object is searched for. Similarly, in the second node, the virtual local area network routing information search, the address translation, and the forwarding between the network devices are implemented, by the second eBPF execution engine based on the hook function, instead of being directly implemented by the kernel protocol stack of the network device, so that the kernel protocol stack of the network device of the second node is bypassed.

Based on the foregoing embodiment, if the first eBPF execution engine in the first node does not find the route information of the second pod from the global node route information maintained by the first eBPF execution engine, the first access request may be transmitted to the kernel protocol stack of the network device of the first node, so that the route information of the second pod is determined by the kernel protocol stack of the network device of the first node, and subsequent operations such as address translation and forwarding are performed. Similarly, if the first eBPF execution engine in the second node does not find the route information of the second pod from the global node route information maintained by the first eBPF execution engine, the first access request may be transmitted to the kernel protocol stack of the network device of the second node, so that the first access request is processed by the kernel protocol stack of the network device of the second node.

In addition, if the first eBPF execution engine finds, from the global node route information maintained by the first eBPF execution engine, the route information of the pod to be accessed and determines that the pod to be accessed is located inside the first node, the first access request may be directly redirected to the pod to be accessed. In other words, if the pod to be accessed is a pod inside the first node, the first access request may be directly forwarded, by the network device (such as a bridge) of the first node, at Layer 2, without cross-node forwarding.

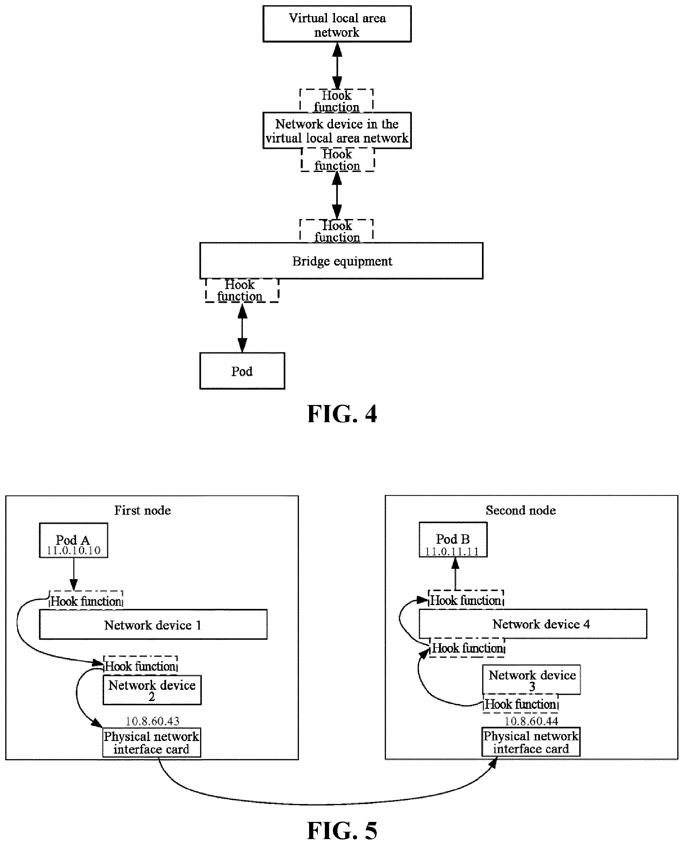

Optionally, as shown in FIG. 4, the hook function may be separately deployed in different directions of different network devices of each node. For example, for a bridge, one hook function is deployed in a direction in which the bridge is connected to the pod, and one hook function is deployed in a direction in which the bridge is connected to a network device (vxlan dev) in the virtual local area network. For the network device (vxlan dev) in the virtual local area network, one hook function is deployed in a direction in which the network device (vxlan dev) is connected to the bridge, and one hook function is deployed in a direction in which the network device (vxlan dev) is connected to the virtual local area network. In this way, data to be processed that enters each network device in different directions may be processed by the corresponding hook function, so that the kernel protocol stack of each network device is bypassed.

The following uses a specific example to describe the foregoing embodiment in detail.

As shown in FIG. 5, a pod PodA (11.0.10.10) of a first node needs to access a pod PodB (11.0.11.11) of a second node. A first eBPF execution engine of the first node obtains a first access request by a hook function preset in a network device 1 of the first node, and searches for route information of the pod PodB based on global node route information. Then, a message of the first access request is directly redirected to a network device 2 of the first node for vxlan encapsulation. Finally, the first access request is sent, through a virtual tunnel (actually based on an underlying physical network of a virtual local area network) in the virtual local area network, to the second node (that is, the first access request is forwarded, by a physical network interface card of the first node, to a physical network interface card of the second node). After receiving the message of the first access request, the second node performs a reverse procedure. A second eBPF execution engine of the second node obtains the first access request by a hook function preset in a network device 3 of the second node, and searches for the route information of the pod PodB based on the global node route information, to perform decapsulation, and redirect the first access request to a network device 4 of the second node. Then, the first access request is redirected, by the hook function preset in the network device 4, to the pod PodB, so that network reception is quickly implemented by bypassing the kernel protocol stack of each network device.

In another embodiment, for access from an application in a node to a pod in another node, for example, access from a first application in a first node to a second pod in a second node in the multiple container clusters, the first application first sends a second access request (data packet) to the second pod, that is, the first application sends the second access request to a network device of the first node, for example, a bridge of the first node. The second access request is obtained, by a first eBPF execution engine in the first node based on the hook function preset in the network device of the first node, and route information of the second pod in the second node is searched for from the global node route information maintained by the first eBPF execution engine. Then, virtual tunnel encapsulation is performed on the second access request based on the route information of the second pod, to send the second access request, through the virtual tunnel, to the second node.

After receiving the second access request, the second node obtains the second access request, by a second eBPF execution engine in the second node based on the hook function preset in the network device (for example, the bridge) of the second node, and searches for the route information of the second pod from the global node route information maintained by the second eBPF execution engine. Then, virtual tunnel decapsulation is performed on the second access request based on the route information of the second pod, and the second access request is sent to the second pod.

When the first eBPF execution engine performs virtual tunnel encapsulation on the second access request based on the route information of the second pod, the route information of the network device of the first node may be determined as the route information of the first application. Then, virtual tunnel encapsulation is performed on the second access request based on the route information (source route information) of the first application and the route information (destination route information) of the second pod, so that the access from the application to the pod can be analogized to the access between pods, to implement cross-node interaction between the application and the pod.

Based on the foregoing embodiment, if the first eBPF execution engine in the first node does not find the route information of the second pod from the global node route information maintained by the first eBPF execution engine, the second access request may be transmitted to the kernel protocol stack of the network device of the first node, so that the route information of the second pod is determined by the kernel protocol stack of the network device of the first node, and subsequent operations such as address translation and forwarding are performed. Similarly, if the first eBPF execution engine in the second node does not find the route information of the second pod from the global node route information maintained by the first eBPF execution engine, the second access request may be transmitted to the kernel protocol stack of the network device of the second node, so that the second access request is processed by the kernel protocol stack of the network device of the second node.

In addition, if the first eBPF execution engine finds, from the global node route information maintained by the first eBPF execution engine, the route information of the pod to be accessed and determines that the pod to be accessed is located inside the first node, the second access request may be directly redirected to the pod to be accessed. In other words, if the pod to be accessed is a pod inside the first node, the second access request may be directly forwarded, by the network device (such as a bridge) of the first node, at Layer 2, without cross-node forwarding.

The following uses a specific example to describe the foregoing embodiment in detail.

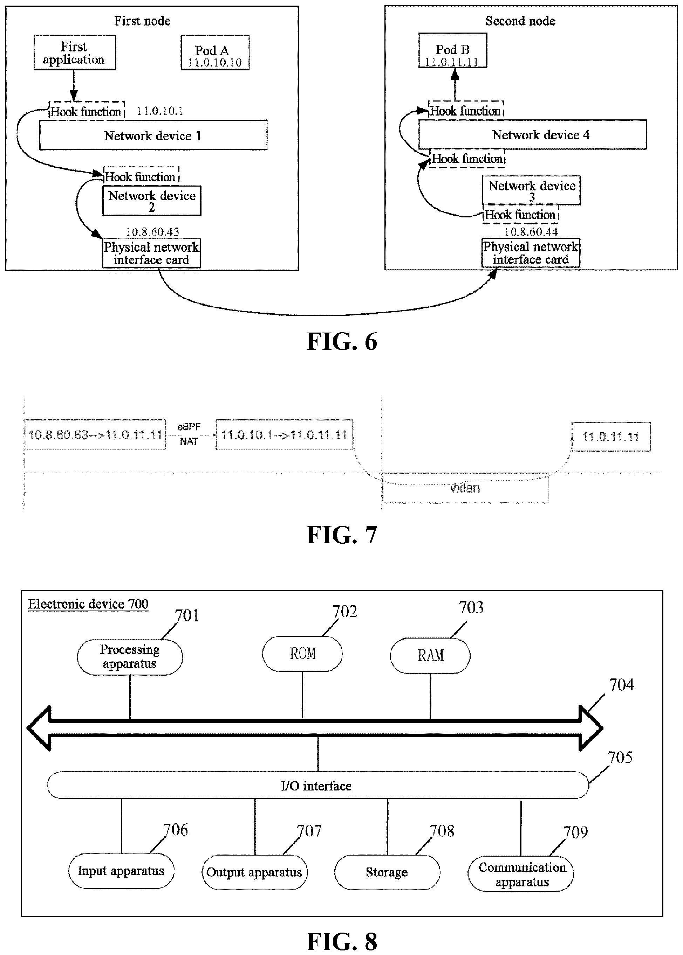

As shown in FIG. 6, a first application in a first node needs to access a pod PodB (11.0.11.11) of a second node. A first eBPF execution engine of the first node obtains a second access request by a hook function preset in a network device 1 of the first node, and performs network address translation (NAT) on a source address of the second access request by the hook function preset in the network device 1. Virtual local area network routing information of the network device (such as a bridge) is used as virtual local area network routing information (that is, the source address of the second access request) of the first application. FIG. 7 shows network address translation as an example. It is assumed that original route information of the first application is 10.8.60.63. After address translation, the original route information is replaced with route information 11.0.10.1 of the network device 1, that is, access from 10.8.60.63 to 11.0.11.11 is changed to access from 11.0.10.1 to 11.0.11.11, so that routing to 11.0.11.11 can be performed subsequently based on a virtual tunnel in the virtual local area network. Route information of the pod PodB is searched for based on global node route information, and then a message of the second access request is directly redirected to a network device 2 of the first node for vxlan encapsulation. Finally, the second access request is sent, through a virtual tunnel (actually based on an underlying physical network of a virtual local area network) in the virtual local area network, to the second node (that is, the second access request is forwarded, by a physical network interface card of the first node, to a physical network interface card of the second node). After receiving the message of the second access request, the second node performs a reverse procedure. A second eBPF execution engine of the second node obtains the second access request by a hook function preset in a network device 3 of the second node, and searches for the route information of the pod PodB based on the global node route information, to perform decapsulation, and redirect the second access request to a network device 4 of the second node. Then, the second access request is redirected, by the hook function preset in the network device 4, to the pod PodB, so that network reception is quickly implemented by bypassing the kernel protocol stack of each network device.

In another embodiment, for access from a pod in a node to an application in another node, for example, access from a first pod in a first node to a second application in a second node in the multiple container clusters, the first pod first sends a third access request (data packet) to the second application, that is, the first pod sends the third access request to a network device of the first node, for example, a bridge of the first node. The third access request is obtained, by a first eBPF execution engine in the first node based on the hook function preset in the network device of the first node, and route information of the network device of the second node is searched for from the global node route information maintained by the first eBPF execution engine. The route information of the network device of the second node is used as route information (destination route information) of the second application. Then, virtual tunnel encapsulation is performed on the third access request based on the route information of the network device of the second node, to send the third access request, through the virtual tunnel, to the second node.

After receiving the third access request, the second node obtains the third access request, by a second eBPF execution engine in the second node based on the hook function preset in the network device (for example, the bridge) of the second node, and searches for the route information of the network device of the second node from the global node route information maintained by the second eBPF execution engine. Then, virtual tunnel decapsulation is performed on the third access request based on the route information of the network device of the second node, and the third access request is sent to the network device of the second node. Then, the third access request is sent, by the network device of the second node, to the second application.

Based on the foregoing embodiment, if the first eBPF execution engine in the first node does not find the route information of the network device of the second node from the global node route information maintained by the first eBPF execution engine, the third access request may be transmitted to the kernel protocol stack of the network device of the first node, so that the route information of the network device of the second node is determined by the kernel protocol stack of the network device of the first node, and subsequent operations such as address translation and forwarding are performed. Similarly, if the first eBPF execution engine in the second node does not find the route information of the network device of the second node from the global node route information maintained by the first eBPF execution engine, the third access request may be transmitted to the kernel protocol stack of the network device of the second node, so that the third access request is processed by the kernel protocol stack of the network device of the second node.

In addition, if the first eBPF execution engine finds, from the global node route information maintained by the first eBPF execution engine, the route information of the application to be accessed and determines that the application to be accessed is located inside the first node, the third access request may be directly redirected to the application to be accessed. In other words, if the application to be accessed is an application inside the first node, the third access request may be directly forwarded, by the network device (such as a bridge) of the first node, at Layer 2, without cross-node forwarding.

In addition, based on any of the foregoing embodiments, a heartbeat message sent by the virtual local area network client in each node in the multiple container clusters may be received, by the virtual local area network controller based on the long link network between the virtual local area network controller and the virtual local area network client in each node in the multiple container clusters. If the virtual local area network controller does not receive the heartbeat message sent by the virtual local area network client in any node within preset duration, the virtual local area network controller marks the network segment resource corresponding to the node as a to-be-reclaimed state, to physically reclaim the network segment resource corresponding to the node.

Based on any of the foregoing embodiments, the virtual local area network controller may further monitor the health of each node based on the long link network between the virtual local area network controller and the virtual local area network client in each node in the multiple container clusters. Specifically, the heartbeat message sent by the virtual local area network client in each node in the multiple container clusters is received, by the virtual local area network controller. If the virtual local area network controller does not receive the heartbeat message sent by the virtual local area network client in any node within preset duration, the virtual local area network controller may mark the network segment resource (such as a CIDR network segment) corresponding to the node as the to-be-reclaimed state, so that the network segment resource corresponding to the node is physically reclaimed subsequently based on the to-be-reclaimed state.

In another optional embodiment, interaction between any node (a pod or an application) in the container cluster and another network device (such as a virtual machine) may be implemented in a process similar to the interaction process in the foregoing embodiments. Specifically, the corresponding network segment resource may also be allocated, by the virtual local area network controller, to another target network device (such as a virtual machine). In other words, the corresponding network segment resource is allocated, by a manner of interaction between the virtual local area network controller and the target network device, to the target network device. The target network device may further configure routing information of the target network device based on the allocated network segment resource, and then send the routing information to the virtual local area network controller. The routing information of the target network device is received, by the virtual local area network controller, and is used as a part of the global node route information. Then, the global node route information is obtained, by the target network device, from the virtual local area network controller, and the global node route information locally maintained in the target network device is updated. In the subsequent interaction process, the virtual tunnel encapsulation and decapsulation are controlled, by the target network device based on the global node route information locally maintained in the target network device.

Corresponding to the network communication method based on multiple container clusters in the foregoing embodiment, FIG. 1 is a structural block diagram of a network communication system based on multiple container clusters according to an embodiment of the present disclosure. For ease of description, only parts related to the embodiments of the present disclosure are shown. Referring to FIG. 1, the network communication system based on multiple container clusters includes a virtual local area network controller and multiple container clusters. Each of the multiple container clusters includes at least one node, and a virtual local area network client is deployed on each node in the multiple container clusters.

The virtual local area network controller is configured to allocate, by a manner of interaction with a virtual local area network client, a corresponding network segment resource to each node in the multiple container clusters, where a corresponding virtual local area network client is configured in each node, each node can be allocated a unique network segment resource in a cluster, and network segment resources of all the nodes do not overlap with each other; receive node route information synchronized by the virtual local area network client in each node in the multiple container clusters, and record global node route information, where the global node route information includes route information of all the nodes in the multiple container clusters.

The virtual local area network client in each node is configured to obtain the global node route information from the virtual local area network controller, and update global node route information locally maintained in the node to which the virtual local area network client belongs.

Each node in the multiple container clusters is configured to control virtual tunnel encapsulation and decapsulation based on the global node route information locally maintained by the node.

In one or more embodiments of the present disclosure, when updating the global node route information locally maintained in the node to which the virtual local area network client belongs, the virtual local area network client is configured to:

store, by the virtual local area network client in each node, the global node route information obtained from the virtual local area network controller in an eBPF execution engine in each node, where the eBPF execution engine is configured to maintain the global node route information locally in the node; and

correspondingly, when controlling the virtual tunnel encapsulation and decapsulation based on the global node route information locally maintained by the node, each node in the multiple container clusters is configured to:
control the virtual tunnel encapsulation and decapsulation, by the eBPF execution engine in each node in the multiple container clusters based on the hook function preset in the network device of each node, according to the global node route information locally maintained by the node.

In one or more embodiments of the present disclosure, when controlling the virtual tunnel encapsulation and decapsulation, by the eBPF execution engine in each node in the multiple container clusters based on the hook function preset in the network device of each node, according to the global node route information locally maintained by the node, each node in the multiple container clusters is configured to:
obtain, by a first eBPF execution engine in a first node in the multiple container clusters based on the hook function preset in the network device of the first node, a first access request in which a first pod in the first node requests to access a second pod in a second node, search for route information of the second pod in the second node from the global node route information maintained by the first eBPF execution engine, and perform virtual tunnel encapsulation on the first access request based on the route information of the second pod, to send the first access request, through a virtual tunnel, to the second node; and
obtain, by a second eBPF execution engine in the second node based on the hook function preset in the network device of the second node, the first access request, search for the route information of the second pod from the global node route information maintained by the second eBPF execution engine, and perform virtual tunnel decapsulation on the first access request based on the route information of the second pod, and then send the first access request to the second pod.

In one or more embodiments of the present disclosure, when controlling the virtual tunnel encapsulation and decapsulation, by the eBPF execution engine in each node in the multiple container clusters based on the hook function preset in the network device of each node, according to the global node route information locally maintained by the node, each node in the multiple container clusters is configured to:
obtain, by a first eBPF execution engine in a first node in the multiple container clusters based on the hook function preset in the network device of the first node, a second access request in which a first application in the first node requests to access a second pod in a second node, search for route information of the second pod in the second node from the global node route information maintained by the first eBPF execution engine, and perform virtual tunnel encapsulation on the second access request based on the route information of the second pod, to send the second access request, through a virtual tunnel, to the second node; and
obtain, by a second eBPF execution engine in the second node based on the hook function preset in the network device of the second node, the second access request, search for the route information of the second pod from the global node route information maintained by the second eBPF execution engine, and perform virtual tunnel decapsulation on the second access request based on the route information of the second pod, and then send the second access request to the second pod.

In one or more embodiments of the present disclosure, when performing virtual tunnel encapsulation on the second access request based on the route information of the second pod, each node in the multiple container clusters is configured to:
determine, by the first eBPF execution engine, the route information of the network device of the first node as the route information of the first application, and perform virtual tunnel encapsulation on the second access request based on the route information (source route information) of the first application and the route information (destination route information) of the second pod.

In one or more embodiments of the present disclosure, when controlling the virtual tunnel encapsulation and decapsulation, by the eBPF execution engine in each node in the multiple container clusters based on the hook function preset in the network device of each node, according to the global node route information locally maintained by the node, each node in the multiple container clusters is configured to:
obtain, by a first eBPF execution engine in a first node in the multiple container clusters based on the hook function preset in the network device of the first node, a third access request in which a first pod in the first node requests to access a second application in a second node, search for route information of the network device of the second node from the global node route information maintained by the first eBPF execution engine, and perform virtual tunnel encapsulation on the third access request based on the route information of the network device of the second node, to send the third access request, through a virtual tunnel, to the second node; and
obtain, by a second eBPF execution engine in the second node based on the hook function preset in the network device of the second node, the third access request, search for the route information of the network device of the second node from the global node route information maintained by the second eBPF execution engine, and perform virtual tunnel decapsulation on the third access request based on the route information of the network device of the second node, and then send the third access request to the network device of the second node. Then, the third access request is sent, by the network device of the second node, to the second application.

In one or more embodiments of the present disclosure, when receiving the node route information synchronized by the virtual local area network client in each node in the multiple container clusters, the virtual local area network controller is configured to:
receive, by the virtual local area network controller based on a long link network between the virtual local area network controller and the virtual local area network client in each node in the multiple container clusters, the node route information synchronized by the virtual local area network client in each node in the multiple container clusters; and
correspondingly, the global node route information is obtained, by the virtual local area network client in each node, from the virtual local area network controller. This includes the following step.

The global node route information is obtained, by the virtual local area network client in each node based on the long link network between the virtual local area network controller and the virtual local area network client in each node in the multiple container clusters, from the virtual local area network controller.

In one or more embodiments of the present disclosure, the virtual local area network controller is further configured to receive, by the virtual local area network controller based on the long link network between the virtual local area network controller and the virtual local area network client in each node in the multiple container clusters, a heartbeat message sent by the virtual local area network client in each node in the multiple container clusters; and if the virtual local area network controller does not receive the heartbeat message sent by the virtual local area network client in any node within preset duration, mark the network segment resource corresponding to the node as a to-be-reclaimed state, to physically reclaim the network segment resource corresponding to the node.

In one or more embodiments of the present disclosure, the virtual local area network controller is further configured to allocate, by a manner of interaction with a target network device, a corresponding network segment resource to the target network device; and receive routing information of the target network device.

The target network device is configured to obtain the global node route information from the virtual local area network controller, and update the global node route information locally maintained in the target network device; and control virtual tunnel encapsulation and decapsulation based on the global node route information maintained in the target network device.

In one or more embodiments of the present disclosure, when allocating, by a manner of interaction with the virtual local area network client, the corresponding network segment resource to each node in the multiple container clusters, the virtual local area network controller is configured to:
allocate, by the manner of interaction between the virtual local area network controller and the virtual local area network client, one or more corresponding network segment resources to the nodes based on a capability of each node in the multiple container clusters and/or a target number of pods to be deployed.

In one or more embodiments of the present disclosure, the virtual local area network client is further configured to, when the pod is deployed in each node in the multiple container clusters, allocate, based on the network segment resource corresponding to the node to which the virtual local area network client belongs, an address to the pod, and determine route information of the pod; and
when receiving the node route information synchronized by the virtual local area network client in each node in the multiple container clusters, the virtual local area network controller is configured to:
receive the route information of the pod synchronized by the virtual local area network client in each node in the multiple container clusters.

The system provided in this embodiment may be configured to perform the technical solutions of the foregoing method embodiments. The implementation principles and technical effects of the system are similar to those of the method embodiments. Details are not described herein again in this embodiment.

Referring to FIG. 8, it shows a schematic structural diagram of an electronic device 700 suitable for implementing the embodiments of the present disclosure, and the electronic device 700 may be a terminal device or a server. The terminal device may include, but is not limited to, mobile terminals such as a mobile phone, a laptop, a digital broadcast receiver, a personal digital assistant (abbreviated as PDA), a tablet computer, a portable media player (abbreviated as PMP), and a vehicle-mounted terminal (such as a vehicle navigation terminal), and fixed terminals such as a digital TV and a desktop computer. The electronic device shown in FIG. 8 is merely an example, and should not impose any limitation to the function and scope of use of the embodiments of the present disclosure.

As shown in FIG. 8, the electronic device 700 may include a processing apparatus 701 (such as a central processing unit and a graphics processor), which can perform various appropriate actions and processes according to a program stored in a read-only memory (abbreviated as ROM) 702 or a program loaded from a storage 708 into a random-access memory (abbreviated as RAM) 703. The RAM 703 further stores various programs and data required for the operation of the electronic device 700. The processing apparatus 701, the ROM 702, and the RAM 703 are connected to each other through a bus 704. An input/output (I/O) interface 705 is also connected to the bus 704.

Generally, the following apparatus may be connected to the I/O interface 705: an input apparatus 706 including, for example, a touch screen, a touch panel, a keyboard, a mouse, a camera, a microphone, an accelerometer, a gyroscope, and the like; an output apparatus 707 including, for example, a liquid crystal display (abbreviated as LCD), a speaker, a vibrator, and the like; the storage 708 including, for example, a magnetic tape, a hard disk, and the like; and a communication apparatus 709. The communication apparatus 709 may allow the electronic device 700 to perform wireless or wired communication with other devices to exchange data. Although FIG. 8 shows the electronic device 700 having various apparatuses, it should be understood that not all of the illustrated apparatuses are necessarily implemented or included. Alternatively, more or fewer apparatuses may be implemented or included.

In particular, according to the embodiments of the present disclosure, the processes described above with reference to the flowcharts may be implemented as a computer software program. For example, an embodiment of the present disclosure includes a computer program product, which includes a computer program carried on a computer readable medium, and the computer program includes program codes for performing the methods shown in the flowcharts. In such embodiment, the computer program may be downloaded online through the communication apparatus 709 and installed, or may be installed from the storage 708, or may be installed from the ROM 702. When the computer program is executed by the processing apparatus 701, the above functions defined in the methods of the embodiments of the present disclosure are executed.

It should be noted that the above computer-readable medium in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that includes or stores a program, and the program may be used by or in combination with an instruction execution system, apparatus or device. In the present disclosure, the computer-readable signal medium may include a data signal propagated in a baseband or as a part of a carrier wave, and computer-readable program codes are carried in the data signal. The data signal propagated in this manner may be in multiple forms and includes, but is not limited to, an electromagnetic signal, an optical signal, or any suitable combination thereof. The computer-readable signal medium may also be any other computer-readable medium than the computer-readable storage medium. The computer-readable signal medium may send, propagate, or transmit a program used by or in combination with the instruction execution system, apparatus or device. The program codes included on the computer-readable medium may be transmitted by any suitable medium, including, but not limited to, an electric wire, an optical cable, radio frequency (RF) or the like, or any suitable combination thereof.

The above computer-readable medium may be included in the above electronic device, or may exist alone without being assembled into the electronic device.

The above computer-readable medium carries one or more programs, and when the one or more programs are executed by the electronic device, the electronic device is enabled to perform the methods shown in the above embodiments.

The computer program codes for performing the operations of the present disclosure may be written in one or more programming languages or a combination thereof, where the above programming languages include object-oriented programming languages such as Java, Smalltalk, and C++, and also include conventional procedural programming languages such as "C" language or similar programming languages. The program codes may be executed entirely on a computer of a user, executed partly on the computer of the user, executed as an independent software package, executed partly on the computer of the user and partly on a remote computer, or executed entirely on the remote computer or a server. In the case involving the remote computer, the remote computer may be connected to the computer of the user through any kind of network, including a local area network (abbreviated as LAN) or a wide area network (abbreviated as WAN), or may be connected to an external computer (for example, through the Internet using an Internet service provider).

The flowcharts and block diagrams in the drawings illustrate the architecture, functions and operations of possible implementations of systems, methods and computer program products according to various embodiments of the present disclosure. In this regard, each block in the flowcharts or block diagrams may represent a module, a program segment, or a part of codes, and the module, the program segment, or the part of codes contains one or more executable instructions for implementing specified logical functions. It should also be noted that in some alternative implementations, the functions marked in the blocks may also occur in an order different from those marked in the drawings. For example, two blocks shown in succession may, in fact, be executed substantially concurrently, or the two blocks may sometimes be executed in a reverse order, depending on the functions involved. It should also be noted that each block in the block diagrams and/or flowcharts and a combination of blocks in the block diagrams and/or flowcharts may be implemented by a dedicated hardware-based system that performs specified functions or operations, or may be implemented by a combination of dedicated hardware and computer instructions.

The units involved in the embodiments described in the present disclosure may be implemented by software or hardware. The name of the unit does not constitute a limitation on the unit itself under certain circumstances. For example, the first obtaining unit may also be described as "a unit for obtaining at least two Internet protocol addresses".

The functions described herein above may be performed at least partially by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection with one or more wires, a portable computer disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

In a first aspect, according to one or more embodiments of the present disclosure, provided is a network communication method based on multiple container clusters, comrising:
allocating, by a manner of interaction between a virtual local area network controller and a virtual local area network client, a corresponding network segment resource to each of multiple nodes in the multiple container clusters, where a corresponding virtual local area network client is configured in each node, each node can be allocated a unique network segment resource in a cluster, and network segment resources of all the nodes do not overlap with each other;
receiving, by the virtual local area network controller, node route information synchronized by the virtual local area network client in each node in the multiple container clusters, and recording global node route information, where the global node route information includes route information of all the nodes in the multiple container clusters;
obtaining, by the virtual local area network client in each node, the global node route information from the virtual local area network controller, and updating global node route information locally maintained in the node to which the virtual local area network client belongs; and
controlling, by each node in the multiple container clusters based on the global node route information locally maintained by each node, virtual tunnel encapsulation and decapsulation.

According to one or more embodiments of the present disclosure, the updating global node route information locally maintained in the node to which the virtual local area network client belongs comprises:
storing, by the virtual local area network client in each node, the global node route information obtained from the virtual local area network controller in an eBPF execution engine in each node, where the eBPF execution engine is configured to maintain the global node route information locally in the node; and
correspondingly, the controlling the virtual tunnel encapsulation and decapsulation, by each node in the multiple container clusters based on the global node route information locally maintained by the node, includes:
   controlling the virtual tunnel encapsulation and decapsulation, by the eBPF execution engine in each node in the multiple container clusters based on the hook function preset in the network device of each node, according to the global node route information locally maintained by each node.

According to one or more embodiments of the present disclosure, the controlling the virtual tunnel encapsulation and decapsulation, by the eBPF execution engine in each node in the multiple container clusters based on the hook function preset in the network device of each node, according to the global node route information locally maintained by the node, comprises:
obtaining, by a first eBPF execution engine in a first node in the multiple container clusters based on the hook function preset in the network device of the first node, a first access request in which a first pod in the first node requests to access a second pod in a second node, searching for route information of the second pod in the second node from the global node route information maintained by the first eBPF execution engine, and performing virtual tunnel encapsulation on the first access request based on the route information of the second pod, to send the first access request, through a virtual tunnel, to the second node; and
obtaining, by a second eBPF execution engine in the second node based on the hook function preset in the network device of the second node, the first access request, searching for the route information of the second pod from the global node route information maintained by the second eBPF execution engine, and performing virtual tunnel decapsulation on the first access request based on the route information of the second pod, and then sending the first access request to the second pod.

According to one or more embodiments of the present disclosure, the controlling the virtual tunnel encapsulation and decapsulation, by the eBPF execution engine in each node in the multiple container clusters based on the hook function preset in the network device of each node, according to the global node route information locally maintained by the node, comprises:
obtaining, by a first eBPF execution engine in a first node in the multiple container clusters based on the hook function preset in the network device of the first node, a second access request in which a first application in the first node requests to access a second pod in a second node, searching for route information of the second pod in the second node from the global node route information maintained by the first eBPF execution engine, and performing virtual tunnel encapsulation on the second access request based on the route information of the second pod, to send the second access request, through a virtual tunnel, to the second node; and
obtaining, by a second eBPF execution engine in the second node based on the hook function preset in the network device of the second node, the second access request, searching for the route information of the second pod from the global node route information maintained by the second eBPF execution engine, and performing virtual tunnel decapsulation on the second access request based on the route information of the second pod, and then sending the second access request to the second pod.

According to one or more embodiments of the present disclosure, the performing virtual tunnel encapsulation on the second access request based on the route information of the second pod comprises:
determining, by the first eBPF execution engine, the route information of the network device of the first node as the route information of the first application, and performing virtual tunnel encapsulation on the second access request based on the route information (source route information) of the first application and the route information (destination route information) of the second pod.

According to one or more embodiments of the present disclosure, the controlling the virtual tunnel encapsulation and decapsulation, by the eBPF execution engine in each node in the multiple container clusters based on the hook function preset in the network device of each node, according to the global node route information locally maintained by the node, comprises:
obtaining, by a first eBPF execution engine in a first node in the multiple container clusters based on the hook function preset in the network device of the first node, a third access request in which a first pod in the first node requests to access a second application in a second node, searching for route information of the network device of the second node from the global node route information maintained by the first eBPF execution engine, and performing virtual tunnel encapsulation on the third access request based on the route information of the network device of the second node, to send the third access request, through a virtual tunnel, to the second node; and
obtaining, by a second eBPF execution engine in the second node based on the hook function preset in the network device of the second node, the third access request, searching for the route information of the network device of the second node from the global node route information maintained by the second eBPF execution engine, and performing virtual tunnel decapsulation on the third access request based on the route information of the network device of the second node, and then sending the third access request to the network device of the second node. Then, the third access request is sent, by the network device of the second node, to the second application.

According to one or more embodiments of the present disclosure, the receiving, by the virtual local area network controller, the node route information synchronized by the virtual local area network client in each node in the multiple container clusters comprises:
receiving, by the virtual local area network controller based on a long link network between the virtual local area network controller and the virtual local area network client in each node in the multiple container clusters, the node route information synchronized by the virtual local area network client in each node in the multiple container clusters; and
correspondingly, the global node route information is obtained, by the virtual local area network client in each node, from the virtual local area network controller. This includes the following step.

The global node route information is obtained, by the virtual local area network client in each node based on the long link network between the virtual local area network controller and the virtual local area network client in each node in the multiple container clusters, from the virtual local area network controller.

According to one or more embodiments of the present disclosure, the method further comprises:

receiving, by the virtual local area network controller based on the long link network between the virtual local area network controller and the virtual local area network client in each node in the multiple container clusters, a heartbeat message sent by the virtual local area network client in each node in the multiple container clusters; and
if the virtual local area network controller does not receive the heartbeat message sent by the virtual local area network client in any node within preset duration, marking, by the virtual local area network controller, the network segment resource corresponding to the node as a to-be-reclaimed state, to physically reclaim the network segment resource corresponding to the node.

According to one or more embodiments of the present disclosure, the method further comprises:
allocating, by a manner of interaction between the virtual local area network controller and a target network device, a corresponding network segment resource to the target network device;
receiving, by the virtual local area network controller, routing information of the target network device;
obtaining, by the target network device, the global node route information from the virtual local area network controller, and updating the global node route information locally maintained in the target network device; and
controlling, by the target network device based on the global node route information maintained in the target network device, the virtual tunnel encapsulation and decapsulation.

According to one or more embodiments of the present disclosure, the allocating, by a manner of interaction between the virtual local area network controller and the virtual local area network client, the corresponding network segment resource to each node in the multiple container clusters comprises:
allocating, by the manner of interaction between the virtual local area network controller and the virtual local area network client, one or more corresponding network segment resources to the nodes based on a capability of each node in the multiple container clusters and/or a target number of pods to be deployed.

According to one or more embodiments of the present disclosure, the receiving, by the virtual local area network controller, the node route information synchronized by the virtual local area network client in each node in the multiple container clusters comprises:
allocating, by the virtual local area network client in each node based on the corresponding network segment resource corresponding to each node, an address to the pod when the pod is deployed in each node in the multiple container clusters, and determining route information of the pod; and
receiving, by the virtual local area network controller, the route information of the pod synchronized by the virtual local area network client in each node in the multiple container clusters.

In a second aspect, according to one or more embodiments of the present disclosure, provided is a network communication system based on multiple container clusters, including: a virtual local area network controller and multiple container clusters, where a virtual local area network client is deployed on each node in the multiple container clusters.

The virtual local area network controller is configured to allocate, by a manner of interaction with the virtual local area network client, a corresponding network segment resource to each node in the multiple container clusters, where a corresponding virtual local area network client is configured in each node, each node can be allocated a unique network segment resource in a cluster, and network segment resources of all the nodes do not overlap with each other; receive node route information synchronized by the virtual local area network client in each node in the multiple container clusters, and record global node route information, where the global node route information includes route information of all the nodes in the multiple container clusters.

The virtual local area network client in each node is configured to obtain the global node route information from the virtual local area network controller, and update global node route information locally maintained in the node to which the virtual local area network client belongs.

Each node in the multiple container clusters is configured to control virtual tunnel encapsulation and decapsulation based on the global node route information locally maintained by the node.

According to one or more embodiments of the present disclosure, when updating the global node route information locally maintained in the node to which the virtual local area network client belongs, the virtual local area network client is configured to:
store, by the virtual local area network client in each node, the global node route information obtained from the virtual local area network controller in an eBPF execution engine in each node, where the eBPF execution engine is configured to maintain the global node route information locally in the node; and
correspondingly, when controlling the virtual tunnel encapsulation and decapsulation based on the global node route information locally maintained by the node, each node in the multiple container clusters is configured to:
   control the virtual tunnel encapsulation and decapsulation, by the eBPF execution engine in each node in the multiple container clusters based on the hook function preset in the network device of each node, according to the global node route information locally maintained by the node.

According to one or more embodiments of the present disclosure, when controlling the virtual tunnel encapsulation and decapsulation, by the eBPF execution engine in each node in the multiple container clusters based on the hook function preset in the network device of each node, according to the global node route information locally maintained by the node, each node in the multiple container clusters is configured to:
obtain, by a first eBPF execution engine in a first node in the multiple container clusters based on the hook function preset in the network device of the first node, a first access request in which a first pod in the first node requests to access a second pod in a second node, search for route information of the second pod in the second node from the global node route information maintained by the first eBPF execution engine, and perform virtual tunnel encapsulation on the first access request based on the route information of the second pod, to send the first access request, through a virtual tunnel, to the second node; and
obtain, by a second eBPF execution engine in the second node based on the hook function preset in the network device of the second node, the first access request, search for the route information of the second pod from the global node route information maintained by the second eBPF execution engine, and perform virtual tunnel decapsulation on the first access request based on the route information of the second pod, and then send the first access request to the second pod.

According to one or more embodiments of the present disclosure, when controlling the virtual tunnel encapsulation and decapsulation, by the eBPF execution engine in each node in the multiple container clusters based on the hook function preset in the network device of each node, according to the global node route information locally maintained by the node, each node in the multiple container clusters is configured to:
obtain, by a first eBPF execution engine in a first node in the multiple container clusters based on the hook function preset in the network device of the first node, a second access request in which a first application in the first node requests to access a second pod in a second node, searching for route information of the second pod in the second node from the global node route information maintained by the first eBPF execution engine, and performing virtual tunnel encapsulation on the second access request based on the route information of the second pod, to send the second access request, through a virtual tunnel, to the second node; and
obtain, by a second eBPF execution engine in the second node based on the hook function preset in the network device of the second node, the second access request, searching for the route information of the second pod from the global node route information maintained by the second eBPF execution engine, and performing virtual tunnel decapsulation on the second access request based on the route information of the second pod, and then sending the second access request to the second pod.

According to one or more embodiments of the present disclosure, when performing virtual tunnel encapsulation on the second access request based on the route information of the second pod, each node in the multiple container clusters is configured to:
determine, by the first eBPF execution engine, the route information of the network device of the first node as the route information of the first application, and perform virtual tunnel encapsulation on the second access request based on the route information (source route information) of the first application and the route information (destination route information) of the second pod.

According to one or more embodiments of the present disclosure, when controlling the virtual tunnel encapsulation and decapsulation, by the eBPF execution engine in each node in the multiple container clusters based on the hook function preset in the network device of each node, according to the global node route information locally maintained by the node, each node in the multiple container clusters is configured to:
obtain, by a first eBPF execution engine in a first node in the multiple container clusters based on the hook function preset in the network device of the first node, a third access request in which a first pod in the first node requests to access a second application in a second node, search for route information of the network device of the second node from the global node route information maintained by the first eBPF execution engine, and perform virtual tunnel encapsulation on the third access request based on the route information of the network device of the second node, to send the third access request, through a virtual tunnel, to the second node; and
obtain, by a second eBPF execution engine in the second node based on the hook function preset in the network device of the second node, the third access request, search for the route information of the network device of the second node from the global node route information maintained by the second eBPF execution engine, and perform virtual tunnel decapsulation on the third access request based on the route information of the network device of the second node, and then send the third access request to the network device of the second node. Then, the third access request is sent, by the network device of the second node, to the second application.

According to one or more embodiments of the present disclosure, when receiving the node route information synchronized by the virtual local area network client in each node in the multiple container clusters, the virtual local area network controller is configured to:
receive, by the virtual local area network controller based on a long link network between the virtual local area network controller and the virtual local area network client in each node in the multiple container clusters, the node route information synchronized by the virtual local area network client in each node in the multiple container clusters; and
correspondingly, the global node route information is obtained, by the virtual local area network client in each node, from the virtual local area network controller. This includes the following step.

The global node route information is obtained, by the virtual local area network client in each node based on the long link network between the virtual local area network controller and the virtual local area network client in each node in the multiple container clusters, from the virtual local area network controller.

According to one or more embodiments of the present disclosure, the virtual local area network controller is further configured to receive, by the virtual local area network controller based on the long link network between the virtual local area network controller and the virtual local area network client in each node in the multiple container clusters, the heartbeat message sent by the virtual local area network client in each node in the multiple container clusters; and if the virtual local area network controller does not receive the heartbeat message sent by the virtual local area network client in any node within preset duration, mark the network segment resource corresponding to the node as the to-be-reclaimed state, to physically reclaim the network segment resource corresponding to the node.

According to one or more embodiments of the present disclosure, the virtual local area network controller is further configured to allocate, by the manner of interaction with the target network device, the corresponding network segment resource to the target network device; and receive the routing information of the target network device.

The target network device is configured to obtain the global node route information from the virtual local area network controller, and update the global node route information locally maintained in the target network device; and control the virtual tunnel encapsulation and decapsulation based on the global node route information maintained in the target network device.

According to one or more embodiments of the present disclosure, when allocating, by the manner of interaction with the virtual local area network client, the corresponding network segment resource to each node in the multiple container clusters, the virtual local area network controller is configured to:
allocate, by the manner of interaction between the virtual local area network controller and the virtual local area network client, the one or more corresponding network segment resources to the nodes based on the capability of each node in the multiple container clusters and/or the target number of pods to be deployed.

According to one or more embodiments of the present disclosure, the virtual local area network client is further configured to, when the pod is deployed in each node in the multiple container clusters, allocate, based on the network segment resource corresponding to the node to which the virtual local area network client belongs, an address to the pod, and determine route information of the pod; and
when receiving the node route information synchronized by the virtual local area network client in each node in the multiple container clusters, the virtual local area network controller is configured to:
receive the route information of the pod synchronized by the virtual local area network client in each node in the multiple container clusters.

In a third aspect, according to one or more embodiments of the present disclosure, provided is an electronic device, including: at least one processor and a memory;
where the memory stores computer-executable instructions; and
the at least one processor executes the computer-executable instructions stored in the memory, to enable the at least one processor to perform the network communication method based on multiple container clusters according to the first aspect and various possible designs of the first aspect.

In a fourth aspect, according to one or more embodiments of the present disclosure, provided is a computer-readable storage medium, where the computer-readable storage medium stores computer-executable instructions, and when a processor executes the computer-executable instructions, the network communication method based on multiple container clusters according to the first aspect and various possible designs of the first aspect is implemented.

In a fifth aspect, according to one or more embodiments of the present disclosure, provided is a computer program product, including computer-executable instructions, where when a processor executes the computer-executable instructions, the network communication method based on multiple container clusters according to the first aspect and various possible designs of the first aspect is implemented.

The above descriptions are merely preferred embodiments of the present disclosure and illustrations of the applied technical principles. Those skilled in the art should understand that the scope of disclosure involved in the present disclosure is not limited to the technical solutions formed by the specific combination of the above technical features, and should also cover, without departing from the above disclosed concept, other technical solutions formed by any combination of the above technical features or equivalent features thereof, such as technical solutions formed by replacing the above features with technical features with similar functions disclosed in the present disclosure (but not limited thereto).

In addition, although operations are depicted in a particular order, it should not be understood that the operations need to be performed in the specific order as shown or in a sequential order. Under certain circumstances, multitasking and parallel processing may be advantageous. Likewise, although the above discussion contains several specific implementation details, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. Rather, the specific features and actions described above are merely example forms of implementing the claims.

## Claims

1. A network communication method based on multiple container clusters, comprising:
allocating (S201), by a manner of interaction between a virtual local area network controller and a virtual local area network client, a corresponding network segment resource to each node in the multiple container clusters, respectively, wherein the corresponding virtual local area network client is configured in each node, and each node can be allocated a unique network segment resource in a cluster, and network segment resources of all nodes do not overlap with each other;
receiving (S202), by the virtual local area network controller, node route information synchronized by the virtual local area network client in each node in the multiple container clusters, and recording global node route information, wherein the global node route information comprises route information of all nodes in the multiple container clusters;
obtaining (S203), by the virtual local area network client in each node, the global node route information from the virtual local area network controller, and updating global node route information locally maintained in a node to which the virtual local area network client belongs; and
controlling (S204), by each node in the multiple container clusters based on the global node route information maintained by each node, virtual tunnel encapsulation and decapsulation.

2. The method according to claim 1, wherein updating the global node route information locally maintained in the node to which the virtual local area network client belongs comprises:
storing, by the virtual local area network client in each node, the global node route information obtained from the virtual local area network controller in an extended Berkeley Packet Filter eBPF execution engine in each node, wherein the eBPF execution engine is configured to maintain the global node route information locally in the node;
correspondingly, controlling, by each node in the multiple container clusters based on the global node route information maintained by each node, the virtual tunnel encapsulation and decapsulation comprises:
controlling, by the eBPF execution engine in each node in the multiple container clusters based on a hook function preset in a network device of each node and based on the global node route information maintained by each node, the virtual tunnel encapsulation and decapsulation.

3. The method according to claim 2, wherein controlling, by the eBPF execution engine in each node in the multiple container clusters based on the hook function preset in the network device of each node and based on the global node route information maintained by each node, the virtual tunnel encapsulation and decapsulation comprises:
obtaining, by a first eBPF execution engine in a first node in the multiple container clusters based on the hook function preset in the network device of the first node, a first access request in which a first pod in the first node requests to access a second pod in a second node, searching for route information of the second pod in the second node from the global node route information maintained by the first eBPF execution engine, and performing virtual tunnel encapsulation on the first access request based on the route information of the second pod, to send the first access request, through a virtual tunnel, to the second node; and
obtaining, by a second eBPF execution engine in the second node based on the hook function preset in the network device of the second node, the first access request, searching for the route information of the second pod from the global node route information maintained by the second eBPF execution engine, and performing virtual tunnel decapsulation on the first access request based on the route information of the second pod, and then sending the first access request to the second pod.

4. The method according to claim 2, wherein controlling, by the eBPF execution engine in each node in the multiple container clusters based on the hook function preset in the network device of each node and based on the global node route information maintained by each node, the virtual tunnel encapsulation and decapsulation comprises:
obtaining, by a first eBPF execution engine in a first node in the multiple container clusters based on the hook function preset in the network device of the first node, a second access request in which a first application in the first node requests to access a second pod in a second node, searching for route information of the second pod from the global node route information maintained by the first eBPF execution engine, and performing virtual tunnel encapsulation on the second access request based on the route information of the second pod, to send the second access request, through a virtual tunnel, to the second node; and
obtaining, by a second eBPF execution engine in the second node based on the hook function preset in the network device of the second node, the second access request, searching for the route information of the second pod from the global node route information maintained by the second eBPF execution engine, and performing virtual tunnel decapsulation on the second access request based on the route information of the second pod, and then sending the second access request to the second pod.

5. The method according to claim 4, wherein performing the virtual tunnel encapsulation on the second access request based on the route information of the second pod comprises:
determining, by the first eBPF execution engine, the route information of the network device of the first node as the route information of the first application, and performing virtual tunnel encapsulation on the second access request based on the route information of the first application and the route information of the second pod.

6. The method according to claim 2, wherein controlling, by the eBPF execution engine in each node in the multiple container clusters based on the hook function preset in the network device of each node and based on the global node route information maintained by the node, the virtual tunnel encapsulation and decapsulation comprises:
obtaining, by a first eBPF execution engine in a first node in the multiple container clusters based on the hook function preset in the network device of the first node, a third access request in which a first pod in the first node requests to access a second application in a second node, searching for route information of the network device of the second node from the global node route information maintained by the first eBPF execution engine, and performing virtual tunnel encapsulation on the third access request based on the route information of the network device of the second node, to send the third access request, through a virtual tunnel, to the second node; and
obtaining, by a second eBPF execution engine in the second node through the hook function preset in the network device of the second node, the third access request, searching for the route information of the network device of the second node from the global node route information maintained by the second eBPF execution engine, and performing virtual tunnel decapsulation on the third access request based on the route information of the network device of the second node, and then sending the third access request to the network device of the second node, then, the third access request is sent, by the network device of the second node, to the second application.

7. The method according to any preceding claim, wherein receiving (S202), by the virtual local area network controller, the node route information synchronized by the virtual local area network client in each node in the multiple container clusters comprises:
receiving, by the virtual local area network controller based on a long link network between the virtual local area network controller and the virtual local area network client in each node in the multiple container clusters, the node route information synchronized by the virtual local area network client in each node in the multiple container clusters; and
correspondingly, obtaining, by the virtual local area network client in each node, the global node route information from the virtual local area network controller comprises:
obtaining, by the virtual local area network client in each node based on the long link network between the virtual local area network controller and the virtual local area network client in each node in the multiple container clusters, the global node route information from the virtual local area network controller.

8. The method according to claim 7, wherein the method further comprises:
receiving, by the virtual local area network controller based on the long link network between the virtual local area network controller and the virtual local area network client in each node in the multiple container clusters, a heartbeat message sent by the virtual local area network client in each node in the multiple container clusters; and
in response that the virtual local area network controller does not receive the heartbeat message sent by the virtual local area network client in any node within preset duration, marking, by the virtual local area network controller, the network segment resource corresponding to any node as a to-be-reclaimed state, to physically reclaim the network segment resource corresponding to any of the node.

9. The method according to any preceding claim, wherein the method further comprises:
allocating, by a manner of interaction between the virtual local area network controller and a target network device, a corresponding network segment resource to the target network device;
receiving, by the virtual local area network controller, routing information of the target network device;
obtaining, by the target network device, the global node route information from the virtual local area network controller, and updating the locally maintained global node route information; and
controlling, by the target network device based on the maintained global node route information, the virtual tunnel encapsulation and decapsulation.

10. The method according to any preceding claim, wherein allocating (S201), by the manner of interaction between the virtual local area network controller and the virtual local area network client, the corresponding network segment resource to each node in the multiple container clusters, respectively, comprises:
allocating, by the manner of interaction between the virtual local area network controller and the virtual local area network client, one or more corresponding network segment resources to each node based on a performance of each node in the multiple container clusters and/or a target deployment number of pods.

11. The method according to any preceding claim, wherein receiving (S202), by the virtual local area network controller, the node route information synchronized by the virtual local area network client in each node in the multiple container clusters comprises:
allocating, by the virtual local area network client in each node based on the corresponding network segment resource corresponding to each node, an address to a pod in a case that the pod is deployed in each node in the multiple container clusters, and determining route information of the pod; and
receiving, by the virtual local area network controller, the route information of the pod synchronized by the virtual local area network client in each node in the multiple container clusters.

12. A network communication system based on multiple container clusters, comprising: a virtual local area network controller and multiple container clusters, wherein a virtual local area network client is deployed on each node in the multiple container clusters;
the virtual local area network controller is configured to allocate, by a manner of interaction with the virtual local area network client, a corresponding network segment resource to each node in the multiple container clusters, respectively, wherein a corresponding virtual local area network client is configured in each node, each node is able to be allocated a unique network segment resource in a cluster, and network segment resources of all nodes do not overlap with each other; receive node route information synchronized by the virtual local area network client in each node in the multiple container clusters, and record global node route information, wherein the global node route information comprises route information of all nodes in the multiple container clusters;
the virtual local area network client in each node is configured to obtain the global node route information from the virtual local area network controller, and update global node route information locally maintained in the node to which the virtual local area network client belongs; and
each node in the multiple container clusters is configured to control virtual tunnel encapsulation and decapsulation based on the global node route information maintained by each node.

13. An electronic device, comprising: at least one processor and a memory, wherein:
the memory stores computer-executable instructions; and
the at least one processor executes the computer-executable instructions stored in the memory, causing the at least one processor to perform the method according to any one of claims 1 to 11.

14. A computer-readable storage medium, wherein the computer-readable storage medium stores computer-executable instructions, and when a processor executes the computer-executable instructions, the method according to any one of claims 1 to 11 is implemented.

15. A computer program product, comprising computer-executable instructions, wherein when a processor executes the computer-executable instructions, the method according to any one of claims 1 to 11 is implemented.
